# EUROPEAN PATENT APPLICATION

(11) **EP 4 509 337 A1**
(43) Date of publication of application: **19.02.2025**
(21) Application number: 24186731.6
(22) Date of filing: 05.07.2024
(51) Int. Cl.: B60H 1/00, B60H 1/22, B60N 2/56

(54) **VEHICLE HEATER CONTROL DEVICE**

(30) Priority: 14.08.2023 JP 2023131886
(71) Applicant: Suzuki Motor Corporation, Shizuoka 432-8611 (JP)
(72) Inventor: YANAGIHARA, Natsuki, HAMAMATSU-SHI, 432-8611 (JP)
(74) Representative: Plasseraud IP

(57) **Abstract**

A vehicle heater control device 1 controls a drive state of a seat heater 23 for warming a seat cushion 21, based on an in-cabin temperature Tc showing a temperature of in-cabin air of a vehicle and a heater periphery temperature Th showing a temperature of a periphery of the seat heater 23, so that the heater periphery temperature Th decreases as the in-cabin temperature Tc increases, in a case in which the in-cabin temperature Tc is within a prescribed range.

## Description

### [Technical Field]

The present invention relates to a vehicle heater control device.

### [Background Art]

Conventionally, in vehicle seats of automobiles or the like, those with a heater disposed in the vicinity of a seat surface are known. A heat-generating member for generating heat by sending a current through copper wire or the like is provided in the heater. In such a seat in which a heater is provided, in a case in which an in-cabin temperature is low, a temperature as felt by an occupant can be raised by having the heat generating member generate heat to warm the seat surface.

For example, Patent Literature 1 discloses a heater device, which includes a heater for warming a vehicle member touched by a driver, the heater device for warming the vehicle member by operating the heater before a vehicle use start time set by the driver. In this heater device, a temperature as felt by the driver is raised, and the comfort of the driver is improved, by operating the heater to warm the vehicle member based on a target surface temperature calculated from an in-cabin temperature and a surface temperature of the vehicle member.

### [Citation List]

### [Patent Literature]

[Patent Literature 1] JP 2016-203704 A

### [Summary of Invention]

### [Problem to be Solved by the Invention]

In addition, in a control of such a vehicle heater, in a case in which the in-cabin temperature is high, when an occupant (driver) of the vehicle makes contact with the vehicle member warmed by the heater, there is the possibility of discomfort by having the contacted part being too hot. However, Patent Literature 1 does not disclose specific content in relation to a setting of a target surface temperature corresponding to an in-cabin temperature. Accordingly, it is difficult to sufficiently handle discomfort of an occupant in a case in which such in-cabin temperature is high, and there is room to improve the comfort of an occupant.

The present invention has been made by focusing on this point, and it has an object of providing a vehicle heater control device that can improve the comfort of an occupant even in a case in which in-cabin temperature is high.

### [Means for Solving the Problem]

On aspect of the present invention for achieving this object is to provide a vehicle heater control device including a control means for controlling a drive state of a heater for warming a vehicle member based on an in-cabin temperature showing a temperature of in-cabin air of a vehicle and a heater periphery temperature showing a temperature of a periphery of the heater. The control means in this vehicle heater control device controls the drive state of the heater so that the heater periphery temperature decreases as the in-cabin temperature increases, in a case in which the in-cabin temperature is within a prescribed range.

### [Advantageous Effect of Invention]

According to the vehicle heater control device relating to the present invention, since a temperature of a vehicle member warmed by a heater can be maintained to be low, when an in-cabin temperature increases, the comfort of an occupant can be improved even in a case in which the in-cabin temperature is high.

### [Brief Description of Drawings]

[Figure 1] Figure 1 is a block diagram showing a configuration of a vehicle heater control device relating to a first embodiment of the present invention.
[Figure 2] Figure 2 is an exploded perspective view showing a configuration example of a seat cushion in the first embodiment.
[Figure 3] Figure 3 is a graph showing an example of a temperature control characteristic referred to in the first embodiment.
[Figure 4] Figure 4 is a graph showing a time change of an in-cabin temperature and a heater periphery temperature in the first embodiment.
[Figure 5] Figure 5 is a flow chart showing a flow of heater control in the first embodiment.
[Figure 6] Figure 6 is a graph showing an example of temperature control characteristics referred to in a second embodiment of the present invention.
[Figure 7] Figure 7 is a graph showing a time change of an in-cabin temperature and a heater periphery temperature in the second embodiment.
[Figure 8] Figure 8 is a graph showing temperature control characteristics referred to in a modified example related to the second embodiment.
[Figure 9] Figure 9 is a graph showing temperature control characteristics referred to in another modified example related to the second embodiment.
[Figure 10] Figure 10 is a graph showing an example of a temperature control characteristic referred to in a third embodiment of the present invention.
[Figure 11] Figure 11 is a graph showing a time change of an in-cabin temperature and a heater periphery temperature in the third embodiment.
[Figure 12] Figure 12 is a graph showing a relationship between air temperature, humidity, and a temperature as felt.
[Figure 13] Figure 13 is a block diagram showing a configuration of a vehicle heater control device relating to a fourth embodiment of the present invention.
[Figure 14] Figure 14 is a graph showing an example of temperature control characteristics referred to in the fourth embodiment.
[Figure 15] Figure 15 is a graph showing a time change of an in-cabin temperature, an in-cabin humidity, and a heater periphery temperature in the fourth embodiment.
[Figure 16] Figure 16 is a block diagram showing a configuration of a vehicle heater control device relating to a fifth embodiment of the present invention.
[Figure 17] Figure 17 is a graph showing an example of temperature control characteristics referred to in the fifth embodiment.
[Figure 18] Figure 18 is a block diagram showing a configuration of a vehicle heater control device relating to a sixth embodiment of the present invention.

### [Mode for Carrying Out the Invention]

Hereinafter, embodiments of the present invention will be described in detail while referring to the attached figures.

### [First Embodiment]

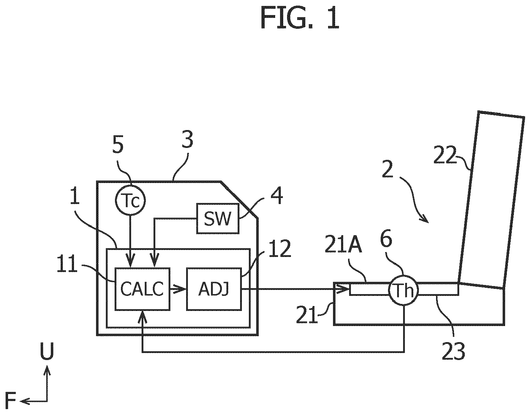

Figure 1 is a block diagram showing a configuration of a vehicle heater control device 1 relating to a first embodiment of the present invention. Note that, in each figure described hereinafter, an arrow F direction shows the front in a vehicle front-rear direction, and an arrow U direction shows above in a vehicle up-down direction. Moreover, an arrow R direction and an arrow L direction show the right and the left at a time when looking to a vehicle front from inside the vehicle.

In Figure 1, the vehicle heater control device 1 of the first embodiment, for example, controls a drive state of a seat heater 23 disposed on a seat 2 of a vehicle such as an automobile. The seat 2 includes a seat cushion 21 on which an occupant sits, and a seatback 22 disposed on a rear portion of the seat cushion 21 and supporting the upper body of the occupant sitting on the seat cushion 21. The seat heater 23 is spread out so as to cover a seat surface 21A of the seat cushion 21. Turning ON/OFF of the seat heater 23 and switching of operation settings can be manually operated by the occupant by using a heater switch (SW) 4 installed on an instrument panel 3 of the vehicle. Note that, in the first embodiment, the seat cushion 21 corresponds to a "vehicle member" of the present invention, and the seat heater 23 corresponds to a "heater" of the present invention.

An in-cabin temperature sensor 5 for detecting a temperature Tc of in-cabin air of the vehicle (hereinafter, called the "in-cabin temperature Tc") is installed on the instrument panel 3. However, an air conditioning temperature sensor (not illustrated) mounted on the vehicle may be commonly used as the in-cabin temperature sensor 5. Moreover, a temperature sensor 6 for detecting a temperature Th of the periphery of the seat heater 23 (hereinafter, called the "heater periphery temperature Th") is installed in the vicinity of the seat heater 23. The heater periphery temperature Th corresponds to a temperature of the seat surface 21A of the seat cushion 21. Hereinafter, the temperature sensor 6 will be called "seat surface temperature sensor 6", and it will be described separately from the in-cabin temperature sensor 5.

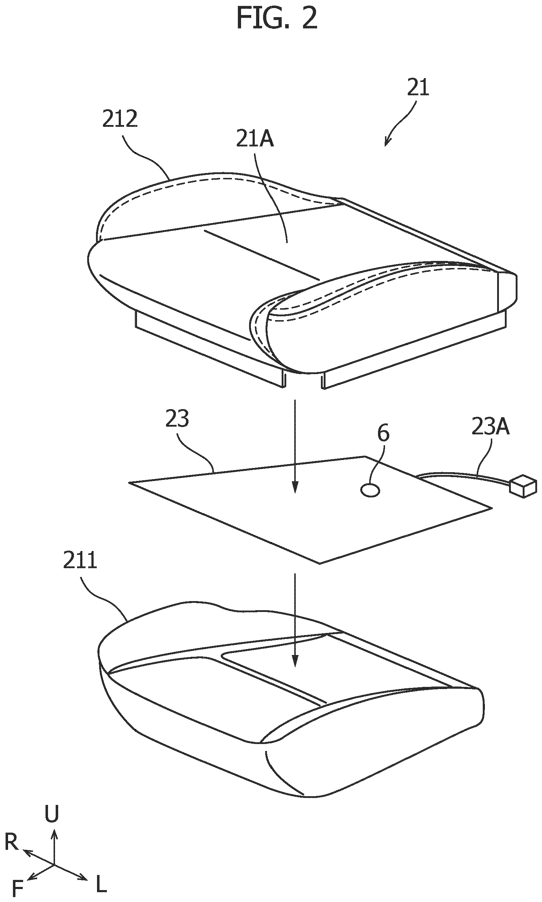

Here, a specific example of the seat cushion 21 on which the seat heater 23 and the seat surface temperature sensor 6 are provided will be described in detail while referring to Figure 2.

Figure 2 is an exploded perspective view showing a configuration example of the seat cushion 21. As shown in Figure 2, the seat cushion 21 has a cushion material 211 on which the seat heater 23 is placed on an upper surface, and a cushion cover 212 that covers the cushion material 211 and the seat heater 23. The seat surface temperature sensor 6 is inserted between the seat heater 23 and the cushion cover 212.

The cushion material 211 is installed on an upper portion of a cushion frame (not illustrated), has an elastic property, and becomes a base for forming the seat surface 21A of the seat cushion 21. A lower surface of the seatback 22, which is in an upright state, is in pressure contact, through the seat heater 23 and the cushion cover 212, with a rear end upper portion of the cushion material 211 (Figure 1).

The cushion cover 212 is a trim covered from above on the cushion material 211, the seat heater 23, and the seat surface temperature sensor 6 (Figure 2). The cushion cover 212 covers the upper portion, the front portion, the rear portion, and both the left and right side portions of the cushion material 211. That is, the seat cushion 21 has a configuration in which the seat heater 23 and the seat surface temperature sensor 6 are interposed at a prescribed position between the cushion material 211 and the cushion cover 212.

The seat heater 23 is spread out in the front-rear direction and the left-right direction so as to cover the upper surface of the cushion material 211 (Figure 2). A heating body made of a heater wire or the like is installed on the inside of the seat heater 23. The heating body is disposed in the periphery of the seat surface 21A of the seat cushion 21. The heating body heats the surroundings by having electric power from an in-vehicle battery (not illustrated) supplied through electrical connector wiring 23A.

The seat surface temperature sensor 6 is provided at a prescribed position on an upper surface of the seat heater 23. In the example of Figure 2, the seat surface temperature sensor 6 is disposed at a vehicle width direction center rear portion on the upper surface of the seat heater 23, and a temperature on a side close to the seat surface 21A in the periphery of the seat heater 23 is detected by the seat surface temperature sensor 6. Note that the seat surface temperature sensor 6 may be independently installed on the seat surface 21A of the seat cushion 21.

The connection state of the heater switch 4, the in-cabin temperature Tc detected by the in-cabin temperature sensor 5, and the heater periphery temperature Th (seat surface temperature) detected by the seat surface temperature sensor 6 are communicated to the vehicle heater control device 1 within the instrument panel 3 via signal wiring within the vehicle (Figure 1). The vehicle heater control device 1 of the first embodiment has, for example, a calculation unit (CALC) 11 and a heater output adjustment unit (ADJ) 12. Note that, in the first embodiment, the calculation unit 11 and the heater output adjustment unit 12 correspond to a "control means" of the present invention.

The calculation unit 11 calculates a target temperature Tt in the periphery (seat surface 21A) of the seat heater 23, by using each signal communicated vis the signal wiring from the heater switch 4, the in-cabin temperature sensor 5, and the seat surface temperature sensor 6. The target temperature Tt is a target value of the heater periphery temperature Th detected by the seat surface temperature sensor 6. The target temperature Tt calculated by the calculation unit 11 can be communicated to the heater output adjustment unit 12.

The heater output adjustment unit 12 controls a drive state of the seat heater 23, by adjusting a current value output to the seat heater 23, in accordance with the target temperature Tt from the calculation unit 11. Note that the control of the drive state of the seat heater 23 is not limited to an adjustment of an output current value to the seat heater 23, for example, an energization time of the seat heater 23 may be adjusted, or an energization frequency of the seat heater 23 may be adjusted by changing it with an inverter or the like. A change of an energization frequency includes increasing and decreasing the frequency, and shifting the phase (delay or sped up).

A calculation process of the target temperature Tt by the calculation unit 11 executes a relationship of the target temperature Tt (target value of the heater periphery temperature Th) with respect to the in-cabin temperature Tc in accordance with a predetermined temperature control characteristic. This temperature control characteristic basically defines a relationship of the target temperature Tt with respect to the in-cabin temperature Tc, which is capable of implementing control so that the heater periphery temperature Th is reduced as the in-cabin temperature Tc increases, in a case in which the in-cabin temperature Tc is within a prescribed range. A function or map information representing the temperature control characteristic is stored in a memory or the like, which is not illustrated, of the calculation unit 11.

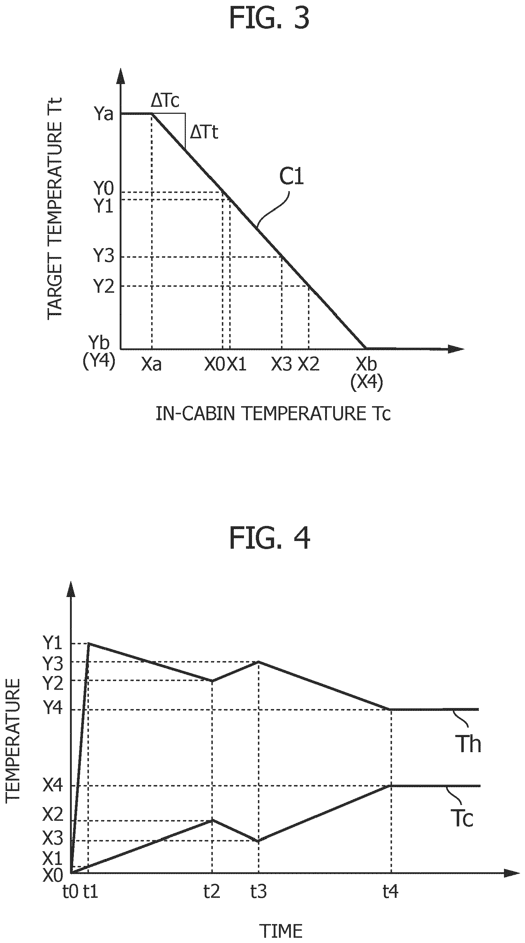

Figure 3 is a graph showing an example of a temperature control characteristic in the first embodiment. The horizontal axis of Figure 3 represents the in-cabin temperature Tc, and the vertical axis of Figure 3 represents the target temperature Tt (target value of the heater periphery temperature Th). As shown in Figure 3, a temperature control characteristic C1 in the first embodiment defines a relationship in which the target temperature Tt monotonically decreases at a constant rate of change with respect to the in-cabin temperature Tc, in a case in which the in-cabin temperature Tc is within a prescribed range (Xa≤Tc≤Xb) from Xa to Xb.

Specifically, in the temperature control characteristic C1, in a case in which the in-cabin temperature Tc is lower than Xa, which is outside the prescribed range (Tc<Xa), the target temperature Tt is set to be constant at Ya (Tt=Ya). Moreover, in a case in which the in-cabin temperature Tc is higher than Xb, which is outside the prescribed range (Tc>Xb), the target temperature Tt is set to be constant at Yb, which is lower than Ya (Tt=Yb<Ya). On the other hand, in a case in which the in-cabin temperature Tc is within the prescribed range from Xa to Xb (Xa≤Tc≤Xb), the target temperature Tt decreases by ΔTt when the in-cabin temperature Tc increases by ΔTc (ΔTc>0, ΔTt<0), and a relationship is set in which this rate of change (ΔTt/ΔTc) becomes constant.

It is possible for a boundary value Xa on a low temperature side in the prescribed range (Xa≤Tc≤Xb) of the in-cabin temperature Tc to be set to a lowest temperature (for example, -30°C or the like) at the time of vehicle use assumed at the time of vehicle development. Moreover, a boundary value Xb on a high temperature side may be set to a temperature (for example, 25°C or the like) at which an occupant feels comfortable and is neither cold nor hot. In addition, an upper limit value Ya of the target temperature Tt corresponding to the in-cabin temperature Tc=Xa may be set to a temperature (for example, 45°C or the like) at which an occupant sitting in the seat 2 is less likely to suffer low-temperature burns. In addition, a lower limit value Yb of the target temperature Tt corresponding to the in-cabin temperature Tc=Xb may be set to a temperature (for example, 36°C or the like) that is the same as human body temperature and at which an occupant does not feel cold or hot even when touching the seat surface 21A. However, these setting values of each temperature are not limited to the example, and it is possible to appropriately change them in accordance with a destination or specification of the vehicle.

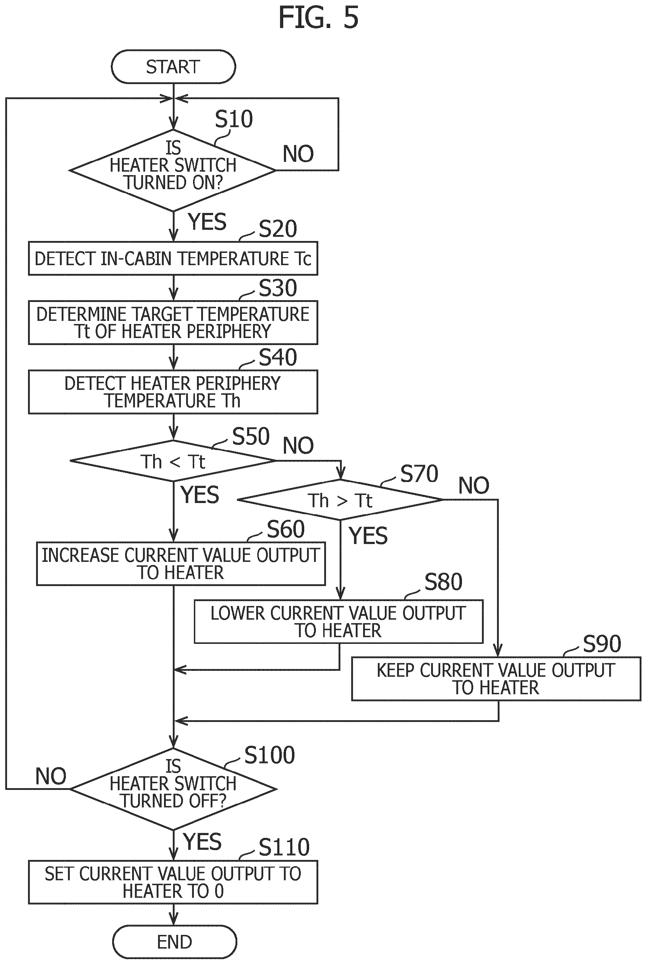

Next, a control operation by the vehicle heater control device 1 of the first embodiment will be described in detail with reference to Figure 4 and Figure 5.

Figure 4 is a graph showing a time change of the in-cabin temperature Tc and the heater periphery temperature Th in the first embodiment. In addition, Figure 5 is a flow chart showing a flow of heater control in the first embodiment.

When heater control by the vehicle heater control device 1 of the first embodiment starts, first, in step S10 of Figure 5, the calculation unit 11 determines whether or not the heater switch 4 is turned ON, by using a signal from the heater switch 4. When ON of the heater switch 4 is determined (YES), in step S20, the calculation unit 11 detects the in-cabin temperature Tc, by using a signal from the in-cabin temperature sensor 5. Here, the in-cabin temperature Tc=X0 is detected at time t0, which starts driving of the seat heater 23 such as shown in Figure 4. Moreover, the heater output adjustment unit 12 sets a current value output to the seat heater 23 to a predetermined initial value.

In the following step S30, the calculation unit 11 determines the target temperature Tt=Y0 corresponding to the in-cabin temperature Tc=X0, by referring to the temperature control characteristic C1 of Figure 3. In step S40, the calculation unit 11 detects the heater periphery temperature Th (seat surface temperature), by using the signal from the seat surface temperature sensor 6. The heater periphery temperature Th at the time of a drive start of the seat heater 23 becomes X0, which is roughly the same as the in-cabin temperature Tc in the example of Figure 4.

In step S50, it is determined, by the calculation unit 11, whether or not the heater periphery temperature Th detected in step S40 is lower than the target temperature Tt (=Y0). In a case in which the heater periphery temperature Th is lower than the target temperature Tt (YES), the process proceeds to step S60. On the other hand, in a case in which the heater periphery temperature Th is not lower than the target temperature Tt (NO), the process proceeds to step S70.

In step S60, the heater output adjustment unit 12, in response to it being determined that the heater periphery temperature Th is lower than the target temperature Tt in the calculation unit 11, increases the current value output to the seat heater 23. In this way, the drive state of the seat heater 23 is controlled in a direction in which the heat amount increases, and the heater periphery temperature Th increases to approach the target temperature Tt. When the process of step S60 is completed, the process moves to step S100.

In step S70, it is determined, by the calculation unit 11, whether or not the heater periphery temperature Th is higher than the target temperature Tt (=Y0). In a case in which the heater periphery temperature Th is higher than the target temperature Tt (YES), the process proceeds to step S80. On the other hand, in a case in which the heater periphery temperature Th is not higher than the target temperature Tt, that is, the heater periphery temperature Th is equal to the target temperature Tt (NO), the process proceeds to step S90.

In step S80, the heater output adjustment unit 12, in response to it being determined that the heater periphery temperature Th is higher than the target temperature Tt in the calculation unit 11, lowers the current value output to the seat heater 23. In this way, the drive state of the seat heater 23 is controlled in a direction in which the heat amount decreases, and the heater periphery temperature Th is lowered to approach the target temperature Tt. When the process of step S80 is completed, the process moves to step S100.

In step S90, the heater output adjustment unit 12, in response to it being determined that the heater periphery temperature Th is equal to the target temperature Tt in the calculation unit 11, keeps the current value output to the seat heater 23 in its present state. In this way, the drive state of the seat heater 23 is controlled so that the heat amount becomes constant, and a state in which the heater periphery temperature Th is equal to the target temperature Tt is maintained.

In step S100, the calculation unit 11 determines whether or not the heater switch 4 is switched to OFF, by using a signal from the heater switch 4. When OFF of the heater switch 4 is determined (YES), in step S 110, the heater output adjustment unit 12 ends heater control by setting the current value output to the seat heater 23 to 0. On the other hand, in a case in which the heater switch 4 is ON as it is (NO of step S100), the process returns to step S10, the series of process of steps S10 to S90 are repeatedly executed, and heater control continues.

During continuation of heater control, for example, when the in-cabin temperature Tc changes with the passage of times t0, t1, t2 ... such as is shown on the lower side of Figure 4, the heater periphery temperature Th (seat surface temperature) changes such as shown on the upper side of Figure 4. Specifically, in the example of Figure 4, the in-cabin temperature Tc rises from X0 to X1 (X0<X1), while time t0-t1 passes. In contrast to this rise of the in-cabin temperature Tc, the target temperature Tt of the heater periphery is lowered from Y0 to Y1, in accordance with the temperature control characteristic C1 of Figure 3 (Y0>Y1). In this way, the in-cabin temperature Tc suddenly rises from ON of the heater switch 4 (drive start of the seat heater 23) at time t0, and reaches the target temperature Tt (=Y1) at time t1 (Figure 4).

At time t1-t2, the in-cabin temperature Tc continues to rise from X1 to X2 (X1<X2), and the target temperature Tt of the heater periphery is lowered from Y1 to Y2 (Y1>Y2), thereby the heater periphery temperature Th decreases from Y1 to Y2. On the other hand, at time t2-t3, the in-cabin temperature Tc temporarily decreases from X2 to X3 (X2>X3), the target temperature Tt of the heater periphery increases from Y2 to Y3 (Y2<Y3), and thereby the heater periphery temperature Th increases from Y2 to Y3.

Then, at time t3-t4, the in-cabin temperature Tc again rises from X3 to X4 (the boundary value Xb on a high temperature side of the prescribed range) (X3<X4=Xb), and the target temperature Tt of the heater periphery decreases from Y3 to Y4 (lower limit value Yb) (Y3>Y4=Yb), thereby the heater periphery temperature Th decreases from Y3 to Y4. After the passage of time t4, the in-cabin temperature Tc becomes constant at X4 (=Xb), and the target temperature Tt of the heater periphery is maintained at Y4 (=Yb), and thereby the heater periphery temperature Th is stabilized at Y4.

According to the vehicle heater control device 1 of the first embodiment, in a case in which the in-cabin temperature Tc is within the prescribed range (Xa≤Tc≤Xb), the drive state of the seat heater 23 is controlled, so that the heater periphery temperature Th decreases as the in-cabin temperature Tc increases. In this way, in a case in which the in-cabin temperature Tc is high, when an occupant of the vehicle makes contact with the seat cushion 21 warmed by the seat heater 23, since a feeling that the contact part is too hot can be reduced, it becomes possible to improve the comfort of the occupant.

### [Second Embodiment]

Next, a vehicle heater control device relating to a second embodiment of the present invention will be described.

In the second embodiment, an application example is described in which heater control corresponding to an operation setting of the seat heater 23 is performed, for example, in a case in which an operation setting of the seat heater 23 in the first embodiment can be switched to the three stages of "high temperature (Hi)", "middle temperature (Mid)", and "low temperature (Low)", by using the heater switch 4.

In the vehicle heater control device 1 of the first embodiment, the calculation unit 11 sets the target temperature Tt of the heater periphery corresponding to the in-cabin temperature Tc, by referring to the one temperature control characteristic C1. In contrast to this, in the second embodiment, the calculation unit 11 sets the target temperature Tt of the heater periphery corresponding to the in-cabin temperature Tc, by referring to the three temperature control characteristics C21, C22, and C23 corresponding to the operation setting of the seat heater 23. Note that the configuration of the vehicle heater control device 1 in the second embodiment is the same as the case of the first embodiment, except for the point of the temperature control characteristics C21-C23 referred to by the calculation unit 11 being different. Accordingly, hereinafter, the differences with the first embodiment will be mainly described in detail.

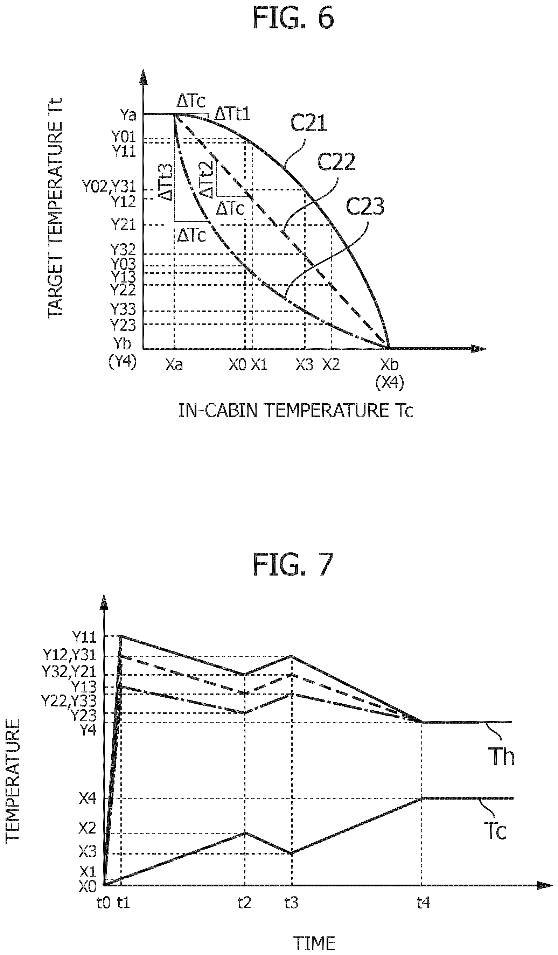

Figure 6 is a graph showing an example of the temperature control characteristics C21-C23 referred to by the calculation unit 11 in the second embodiment. The temperature control characteristic C21 shown by the solid line in Figure 6 is referred to at a time when the operation setting of the seat heater 23 is a high temperature (Hi), the temperature control characteristic C22 shown by the broken line is referred to at a time when the operation setting of the seat heater 23 is a middle temperature (Mid), and the temperature control characteristic C23 shown by the one dotted chain line is referred to at a time when the operation setting of the seat heater 23 is a low temperature (Low). The temperature control characteristic C22 corresponding to the operation setting of a middle temperature (Mid), similar to the temperature control characteristic C1 of the case of the first embodiment, defines a relationship in which the target temperature Tt decreases by ΔTt2 when the in-cabin temperature Tc rises by ΔTc (ΔTc>0, ΔTt2<0), and this rate of change (ΔTt2/ΔTc) becomes constant, within the prescribed range (Xa≤Tc≤Xb) of the in-cabin temperature Tc.

In contrast to such a rate of change (ΔTt2/ΔTc) becoming the constant temperature control characteristic C22, the temperature control characteristic C21 corresponding to the operation setting of a high temperature (Hi) defines a relationship in which an absolute value |ΔTt1/ΔTc| of the rate of change of the target temperature Tt with respect to the in-cabin temperature Tc gradually decreases as the in-cabin temperature Tc decreases within the prescribed range (Xa≤Tc≤Xb). In other words, the temperature control characteristic C21 defines a relationship in which the absolute value |ΔTt1/ΔTc| of the rate of change gradually increases as the in-cabin temperature Tc increases within the prescribed range (Xa≤Tc≤Xb). That is, the temperature control characteristic C21 defines a relationship in which a change of the target temperature Tt with respect to a change of the in-cabin temperature Tc becomes a monotonic decrease along an upward convex curve, within the prescribed range (Xa≤Tc≤Xb) of the in-cabin temperature Tc.

On the other hand, the temperature control characteristic C23 corresponding to the operation setting of a low temperature (Low) defines a relationship in which an absolute value |ΔTt3/ΔTc| of the rate of change of the target temperature Tt with respect to the in-cabin temperature Tc gradually increases as the in-cabin temperature Tc decreases within the prescribed range (Xa≤Tc≤Xb). In other words, the temperature control characteristic C23 defines a relationship in which the absolute value |ΔTt3/ΔTc| of the rate of change gradually decreases as the in-cabin temperature Tc is raised within the prescribed range (Xa≤Tc≤Xb). That is, the temperature control characteristic C23 defines a relationship in which a change of the target temperature Tt with respect to a change of the in-cabin temperature Tc becomes a monotonic decrease along a downward convex curve, within the prescribed range (Xa≤Tc≤Xb) of the in-cabin temperature Tc.

Figure 7 is a graph showing a time change of the in-cabin temperature Tc and the heater periphery temperature Th in the second embodiment.

In heater control of the second embodiment executed by referring to the three temperature control characteristics C21-C23, in step S30 (Figure 5) of the case of the first embodiment, the calculation unit 11, when determining the target temperature Tt corresponding to the in-cabin temperature Tc, determines whether the operation setting of the seat heater 23 corresponds to any one of a high temperature (Hi), a middle temperature (Mid), and a low temperature (Low), by using a signal from the heater switch 4, and refers to the temperature control characteristic corresponding to the determination result. The flow of heater control in the second embodiment from here onwards is the same as in the case of the first embodiment.

Here, the in-cabin temperature Tc shown on the lower stage of Figure 7 describes a time change of the heater periphery temperature Th by assuming a condition that changes the same as the case of the first embodiment. In such a condition, in a case in which the temperature control characteristic C22 corresponding to the operation setting of a middle temperature (Mid) is referred to, the heater periphery temperature Th, similar to the case of the first embodiment, suddenly rises to Y12 at time t0-t1, and thereafter decreases to Y22 at time t1-t2 (Y12>Y22), temporarily rises to Y32 at time t2-t3 (Y22<Y32), and decreases to Y4 at time t3-t4.

In a case in which the temperature control characteristic C21 corresponding to the operation setting of a high temperature (Hi) is referred to, the target temperature Tt=Y1 1 corresponding to the in-cabin temperature Tc=X1 is set at time t1, the target temperature Tt=Y21 corresponding to the in-cabin temperature Tc=X2 is set at time t2, and the target temperature Tt=Y31 corresponding to the in-cabin temperature Tc=X3 is set at time t3 (Figure 6). Each value Y11, Y21, and Y31 of the target temperature Tt set by referring to the temperature control characteristic C21 is higher than each value of Y12, Y22, and Y32 of the target temperature Tt set by referring to the temperature control characteristic C22 corresponding to a middle temperature (Mid) (Y11>Y12, Y21>Y22, Y31>Y32). Therefore, the heater periphery temperature Th (solid line of the upper stage of Figure 7) by heater control referring to the temperature control characteristic C21 corresponding to a high temperature (Hi) becomes higher than the heater periphery temperature Th (broken line of the upper stage of Figure 7) by heater control referring to the temperature control characteristic C22 corresponding to a middle temperature (Mid).

On the other hand, in a case in which the temperature control characteristic C23 corresponding to the operation setting of a low temperature (Low) is referred to, the target temperature Tt=Y13 corresponding to the in-cabin temperature Tc=X1 is set at time t1, the target temperature Tt=Y23 corresponding to the in-cabin temperature Tc=X2 is set at time t2, and the target temperature Tt=Y33 corresponding to the in-cabin temperature Tc=X3 is set at time t3 (Figure 6). Each value Y13, Y23, Y33 of the target temperature Tt set by referring to the temperature control characteristic C23 is lower than each value Y12, Y22, Y32 of the target temperature Tt set by referring to the temperature control characteristic C22 corresponding to a middle temperature (Mid) (Y13<Y12, Y23<Y22, Y33<Y32). Therefore, the heater periphery temperature Th (one dotted chain line of the upper stage of Figure 7) by heater control referring to the temperature control characteristic C23 corresponding to a low temperature (Low) becomes lower than the heater periphery temperature Th (broken line of the upper stage of Figure 7) by heater control referring to the temperature control characteristic C22 corresponding to a middle temperature (Mid).

Note that in the second embodiment, heater control executed by referring to the three temperature control characteristics C21-C23 corresponds to a "plurality of control modes" of the present invention. Moreover, heater control executed by referring to the temperature control characteristic C21 corresponding to a high temperature (Hi) corresponds to a "first control mode" of the present invention, and heater control executed by referring to the temperature control characteristic C23 corresponding to a low temperature (Low) corresponds to a "second control mode" of the present invention.

In heater control of the second embodiment, in a case in which a high temperature (Hi) is selected as the operation setting of the seat heater 23, it can be considered that an occupant desires a seat surface 21A of the seat cushion 21 to be maintained at a warmer state. The temperature of the seat surface 21A has a tendency to decrease as the in-cabin temperature Tc decreases. Accordingly, the drive state of the seat heater 23 is controlled, by referring to the temperature control characteristic C21 such that a decreasing amount of the target temperature Tt is reduced in accordance with a decrease of the in-cabin temperature Tc, thereby the seat surface in the periphery of the seat heater 23 is easily maintained in a warm state, and the comfort of an occupant can be further improved. Moreover, heater control is performed by switching the temperature control characteristics C21-C23 in accordance with not only the operation setting of a high temperature (Hi), but also by each of the operation settings of a middle temperature (Mid) and a low temperature (Low), and thereby the temperature of the seat surface 21A can be appropriately adjusted in accordance with the desire of an occupant, and it becomes possible to further improve the comfort of an occupant.

### [Modified Example 1]

Here, modified examples related to the second embodiment will be described.

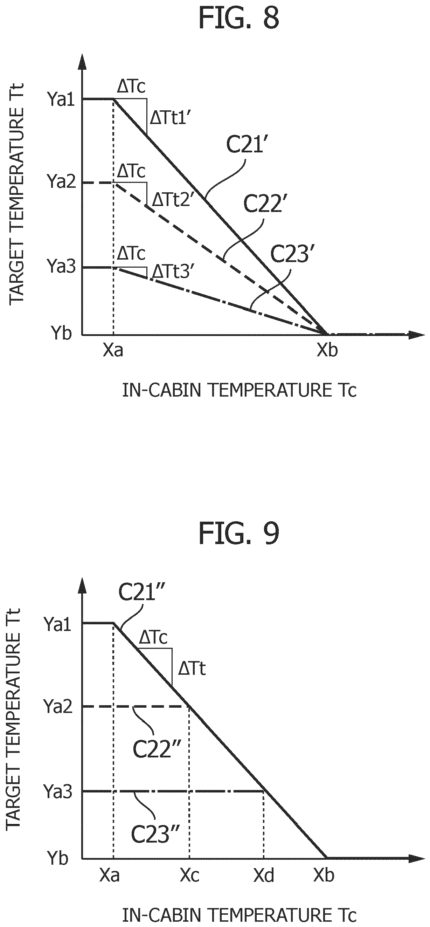

In the second embodiment, an example is described in which heater control is executed by referring to the three temperature control characteristics C21-C23, which have a different increase/decrease tendency of the rate of change of the target temperature Tt with respect to the in-cabin temperature Tc, within the prescribed range (Xa≤Tc≤Xb) of the in-cabin temperature Tc. In contrast to this, in a modified example 1, as shown in Figure 8, heater control is executed by referring to temperature control characteristics C21', C22', and C23', for which each target temperature Tt corresponding to the boundary value Xa on a low temperature side is set to a different value of Ya1, Ya2, and Ya3 in the prescribed range of the in-cabin temperature Tc, and each target temperature Tt corresponding to the boundary value Xb on a high temperature side is set to a common value of Yb.

Specifically, the temperature control characteristic C21' in the modified example 1 has the same characteristic as the temperature control characteristic C1 of the first embodiment shown in Figure 3. The target temperature Tt=Ya2 corresponding to the in-cabin temperature Tc=Xa in the temperature control characteristic C22' is set lower with respect to the target temperature Tt=Ya1 corresponding to the in-cabin temperature Tc=Xa in the temperature control characteristic C21', and the target temperature Tt=Ya3 corresponding to the in-cabin temperature Tc=Xa in the temperature control characteristic C23' is set to be further lower (Ya1>Ya2>Ya3). Note that the target temperature Tt=Yb corresponding to the in-cabin temperature Tc=Xb that is in common for each of the temperature control characteristics C21'-C23' is set so as to be lower than the target temperature Tt=Ya3 of the temperature control characteristic C23' (Ya3>Yb).

In accordance with the difference of each setting value of Ya1, Ya2, and Ya3 of such a target temperature Tt, an absolute value |ΔTt/ΔTc| of the rate of change of the target temperature Tt with respect to the in-cabin temperature Tc within the prescribed range (Xa≤Tc≤Xb) of the in-cabin temperature Tc is set to be smaller for the temperature control characteristic C22' than the temperature control characteristic C21', and is also set to be smaller for the temperature control characteristic C23' than the temperature control characteristic C22' (|ΔTt1'/ΔTc|>|ΔTt2'/ΔTc|>|ΔTt3'/ΔTc|).

In the modified example 1 in which heater control is performed by referring to the temperature control characteristics C21'-C23', the temperature control characteristic C21' is referred to at a time when the operation setting of the seat heater 23 is a high temperature (Hi), the temperature control characteristic C22' is referred to at a time when a middle temperature (Mid), and the temperature control characteristic C23' is referred to at a time of a low temperature (Low). In this way, even if heater control is performed by switching the temperature control characteristics C21'-C23' in accordance with the operation setting of the seat heater 23, the heater periphery temperature Th (seat surface temperature) can be appropriately adjusted in accordance with the desire of an occupant.

### [Modified Example 2]

In the modified example 1, an example is shown in which an absolute value |ΔTt/ΔTc| of the rate of change of the target temperature Tt with respect to the in-cabin temperature Tc within the prescribed range (Xa≤Tc≤Xb) of the in-cabin temperature Tc is different in each of the temperature control characteristics C21'-C23'. In contrast to this, in a modified example 2, as shown in Figure 9, the characteristics of temperature control characteristics C22" and C23" are modified, so that an absolute value |ΔTt/ΔTc| of the rate of change in each of the temperature control characteristics C21", C22", and C23" is the same.

Specifically, the temperature control characteristic C22" has a target temperature Tt corresponding to the boundary value Xa on a low temperature side in the prescribed range of the in-cabin temperature Tc that is set to Ya2, and this target temperature Tt=Ya2 is maintained until the in-cabin temperature Tc=Xc at which the target temperature Tt in the temperature control characteristic C21" becomes equal to Ya2. Similarly, the temperature control characteristic C23" has a target temperature Tt corresponding to the boundary value Xa on a low temperature side that is set to Ya3, and this target temperature Tt=Ya3 is maintained until the in-cabin temperature Tc=Xd at which the target temperature Tt in the temperature control characteristic C21" becomes equal to Ya3. Even if heater control is performed by switching the temperature control characteristics C21"-C23", the heater periphery temperature Th (seat surface temperature) can be appropriately adjusted in accordance with the desire of an occupant.

Note that, in the second embodiment and the modified examples 1 and 2, while examples are described in which the operation setting of the seat heater 23 is switched according to a manual operation of the heater switch 4 by an occupant, the present invention is also effective in a case in which the operation setting of the seat heater 23 is automatically switched by an auto mode or the like.

### [Third Embodiment]

Next, a vehicle heater control device relating to a third embodiment of the present invention will be described.

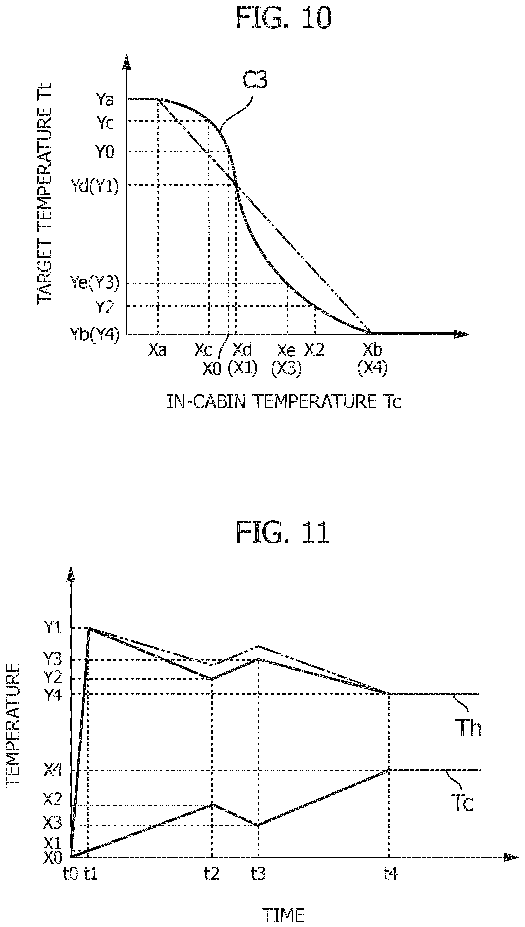

In the first embodiment, a case is described in which the temperature control characteristic C1 referred to in the control of the seat heater 23 (Figure 3) has a characteristic in which the target temperature Tt decreases by ΔTt when the in-cabin temperature Tc rises by ΔTc, and this rate of change (ΔTt/ΔTc) becomes constant, within the prescribed range (Xa≤Tc≤Xb) of the in-cabin temperature Tc. In contrast to this, in the third embodiment, as shown in Figure 10, control of the drive state of the seat heater 23 is performed, by referring to the temperature control characteristic C3 in which an absolute value |ΔTt/ΔTc| of the rate of change of the target temperature Tt with respect to the in-cabin temperature Tc changes from an increase to a decrease, with respect to a change in which the in-cabin temperature Tc rises within the prescribed range (Xa≤Tc≤Xb). Note that, the configuration of the vehicle heater control device 1 in the third embodiment is the same as the case of the first embodiment, except for the point of the temperature control characteristic C3 referred to by the calculation unit 11 being different.

Specifically, the temperature control characteristic C3 shown by the solid line in Figure 10, similar to the temperature control characteristic C1 of the first embodiment (two dotted chain line of Figure 10), has the target temperature Tt corresponding to the boundary value Xa on a low temperature side in the prescribed range of the in-cabin temperature Tc that is set to Ya, and has a target temperature Tt corresponding to the boundary value Xb on a high temperature side that is set to Yb. The point of the temperature control characteristic C3 being different from the temperature control characteristic C1 is the point of having a tendency in which an absolute value |ΔTt/ΔTc| of the rate of change of the target temperature Tt with respect to the in-cabin temperature Tc gradually increases, with respect to a rising change at a low temperature side within the prescribed range of the in-cabin temperature Tc, and having a tendency in which an absolute value |ΔTt/ΔTc| of the rate of change of the target temperature Tt with respect to the in-cabin temperature Tc gradually decreases, with respect to a rising change at a high temperature side within the prescribed range of the in-cabin temperature Tc. In other words, the temperature control characteristic C3 has a characteristic in which a change of the target temperature Tt with respect to a change of the in-cabin temperature Tc becomes a monotonic decrease along an upward convex curve, at a low temperature side within the prescribed range of the in-cabin temperature Tc, and a change of the target temperature Tt with respect to a change of the in-cabin temperature Tc becomes a monotonic decrease along a downward convex curve, at a high temperature side within the prescribed range of the in-cabin temperature Tc.

In such a temperature control characteristic C3, in a range in which the in-cabin temperature Tc is Xa-Xc (the target temperature Tt is Ya-Yc), the in-cabin temperature Tc is very low and the heater periphery temperature Th (seat surface temperature) easily decreases. Accordingly, by making a change of the target temperature Tt with respect to a change of the in-cabin temperature Tc gentle, a decrease of the heater periphery temperature Th is reduced, and the seat surface 21A of the seat cushion 21 is easily maintained in a warm state.

Moreover, in a range in which the in-cabin temperature Tc is Xc-Xd (the target temperature Tt is Yc-Yd), the in-cabin temperature Tc is low, and the heater periphery temperature Th still easily decreases. Accordingly, by making a change of the target temperature Tt with respect to a change of the in-cabin temperature Tc gentler, a decrease of the heater periphery temperature Th is reduced, and the seat surface 21A of the seat cushion 21 is easily maintained in a warm state. However, compared to the range in which the in-cabin temperature Tc is Xa-Xc, since a change amount of the target temperature Tt with respect to a change of the in-cabin temperature Tc is increasing, an occupant feeling that the seat surface 21A is too warm can be reduced.

In addition, in a range in which the in-cabin temperature Tc is Xd-Xe (the target temperature Tt is Yd-Ye), the in-cabin temperature Tc slightly rises. Accordingly, by increasing a change amount of the target temperature Tt with respect to a change of the in-cabin temperature Tc, an occupant feeling that the seat surface 21A is too warm is reduced.

In addition, in a range in which the in-cabin temperature Tc is Xe-Xb (the target temperature Tt is Ye-Yb), the in-cabin temperature Tc increases, and the heater periphery temperature Th (seat surface temperature) approaches the body temperature of an occupant. Accordingly, the target temperature Tt changes in accordance with a change of the in-cabin temperature Tc.

Figure 11 is a graph showing a time change of the in-cabin temperature Tc and the heater periphery temperature Th in the third embodiment. Here, a time change of the heater periphery temperature Th is described, by assuming a condition in which the in-cabin temperature Tc shown on the lower stage of Figure 11 changes similar to the case of the first embodiment.

In such a condition, in a case in which the temperature control characteristic C3 is referred to, the heater periphery temperature Th suddenly increases to Y1 at time t0-t1, such as shown by the solid line on the lower stage of Figure 11, thereafter decreases to Y2 at time t1-t2 (Y1>Y2), temporarily increases to Y3 at time t2-t3 (Y2<Y3), and decreases to Y4 at time t3-t4. The time change of this heater periphery temperature Th is shifted at a low temperature side compared to the time change (two dotted chain line of Figure 11) of the heater periphery temperature Th in a case in which the temperature control characteristic C1 is referred to in the first embodiment. Accordingly, it is possible for an occupant feeling that the seat surface 21A is too warm to be reduced.

### [Fourth Embodiment]

Next, a vehicle heater control device relating to a fourth embodiment of the present invention will be described.

In the fourth embodiment, an application example of a case of performing heater control that considers the influence of a temperature as felt with the humidity is described.

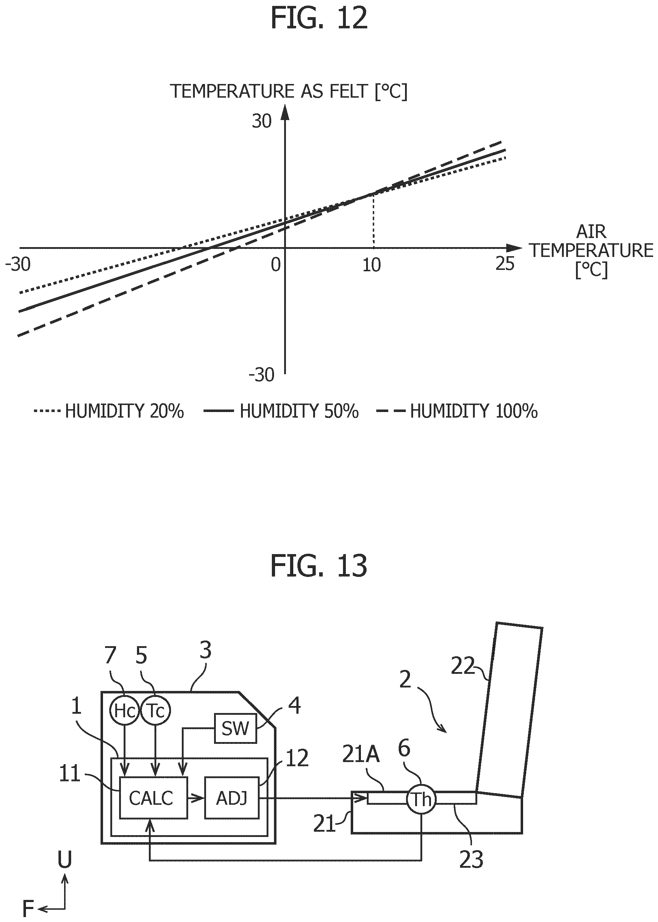

Generally, the relationship of air temperature, humidity, and temperature as felt, as shown in Figure 12, has a temperature as felt that decreases when the humidity is high, and a temperature as felt that increases when the humidity is low, under conditions in which the air temperature is relatively low (about 10°C or less). On the other hand, a temperature as felt increases when the humidity is high and a temperature as felt decreases when the humidity is low, at an air temperature that is relatively high (about 10°C or more). By using such a relationship between air temperature, humidity, and temperature as felt, in the fourth embodiment, heater control is performed while switching the temperature control characteristics in accordance with an in-cabin humidity.

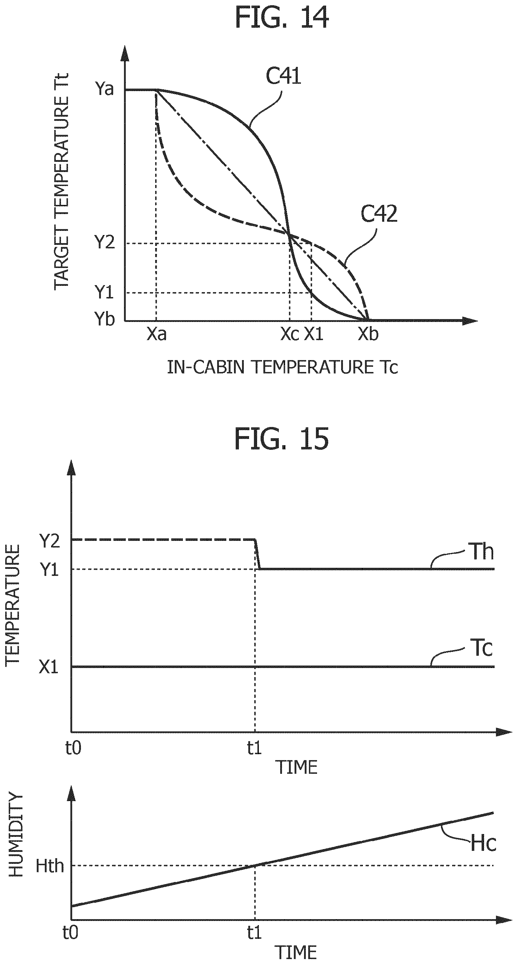

Figure 13 is a block diagram showing a configuration of the vehicle heater control device 1 of the fourth embodiment. In addition, Figure 14 is a graph showing an example of the temperature control characteristics referred to in the fourth embodiment.

In Figure 13 and Figure 14, the point of the configuration of the vehicle heater control device 1 of the fourth embodiment being different from the case of the first embodiment is the point of having an in-cabin humidity sensor 7 for detecting a humidity Hc of in-cabin air of the vehicle (hereinafter, called the "in-cabin humidity Hc") installed on the instrument panel 3, and having temperature control characteristics C41 and C42 referred to by the calculation unit (CALC) 11 switched, in accordance with a detection result of the in-cabin humidity sensor 7. Since the other configurations in the vehicle heater control device 1 of the fourth embodiment are the same as the case of the first embodiment, the same reference numerals will be attached to corresponding elements, and description will be omitted.

The temperature control characteristic C41 shown by the solid line in Figure 14 is referred to at a time of a humid state in which the in-cabin humidity Hc exceeds a predetermined threshold Hth, and the temperature control characteristic C42 shown by the broken line in Figure 14 is referred to at a time of a dry state in which the in-cabin humidity Hc becomes equal to or less than the threshold Hth.

Specifically, the temperature control characteristic C41 corresponding to a humid state, similar to the temperature control characteristic C3 of the third embodiment (Figure 10), has a tendency in which an absolute value |ΔTt/ΔTc| of the rate of change of the target temperature Tt with respect to the in-cabin temperature Tc gradually increases, with respect to a rising change at a low temperature side within the prescribed range of the in-cabin temperature Tc, and has a tendency in which an absolute value |ΔTt/ΔTc| of the rate of change of the target temperature Tt with respect to the in-cabin temperature Tc gradually decreases, with respect to a rising change at a high temperature side within the prescribed range of the in-cabin temperature Tc. That is, the temperature control characteristic C41 has a characteristic in which an absolute value |ΔTt/ΔTc| of the rate of change changes from an increase to a decrease, in an increasing change within the prescribed range of the in-cabin temperature Tc. In other words, the temperature control characteristic C41 has a characteristic in which a change of the target temperature Tt with respect to a change of the in-cabin temperature Tc becomes a monotonic decrease along an upward convex curve, at a low temperature side within the prescribed range of the in-cabin temperature Tc, and a change of the target temperature Tt with respect to a change of the in-cabin temperature Tc becomes a monotonic decrease along a downward convex curve, at a high temperature side within the prescribed range of the in-cabin temperature Tc.

On the other hand, the temperature control characteristic C42 corresponding to a dry state has a tendency in which an absolute value |ΔTt/ΔTc| of the rate of change of the target temperature Tt with respect to the in-cabin temperature Tc gradually decreases, with respect to a rising change at a low temperature side within the prescribed range of the in-cabin temperature Tc, and has a tendency in which an absolute value |ΔTt/ΔTc| of the rate of change of the target temperature Tt with respect to the in-cabin temperature Tc gradually increases, with respect to a rising change at a high temperature side within the prescribed range of the in-cabin temperature Tc. That is, the temperature control characteristic C42 has a characteristic in which an absolute value |ΔTt/ΔTc| of the rate of change turns from a decrease to an increase, in a rising change within the prescribed range of the in-cabin temperature Tc. In other words, the temperature control characteristic C42 has a characteristic in which a change of the target temperature Tt with respect to a change of the in-cabin temperature Tc becomes a monotonic decrease along a downward convex curve, at a low temperature side within the prescribed range of the in-cabin temperature Tc, and a change of the target temperature Tt with respect to a change of the in-cabin temperature Tc becomes a monotonic decrease along an upward convex curve, at a high temperature side within the prescribed range of the in-cabin temperature Tc.

Each inflection point in such temperature control characteristics C41 and C42 overlaps at a time when the in-cabin temperature Tc is Xc. The in-cabin temperature Tc=Xc is set in accordance with an air temperature (about 10°C) at which the relationship of air temperature, humidity, and temperature as felt, switches.

Figure 15 is a graph showing a time change of the in-cabin temperature Tc, the in-cabin humidity Hc, and the heater periphery temperature Th in the fourth embodiment.

Heater control in the fourth embodiment executed by referring to such temperature control characteristics C41 and C42 determines a magnitude relationship of the in-cabin humidity Hc and the threshold Hth, by using a signal from the in-cabin humidity sensor 7, and refers to a temperature control characteristic corresponding to this determination result, when the calculation unit 11 determines the target temperature Tt corresponding to the in-cabin temperature Tc, in step S30 (Figure 5) of the case of the first embodiment. The flow of heater control in the fourth embodiment from here onwards is the same as the case of the first embodiment.

Here, a condition is assumed in which the in-cabin temperature Tc, such as shown on the upper stage lower side of Figure 15, is constant at X1, the in-cabin humidity Hc such as shown on the lower stage of Figure 15 rises along with the passage of time, and the in-cabin humidity Hc at time t1 exceeds the threshold Hth. Note that the in-cabin temperature Tc=X1 becomes higher than the in-cabin temperature Tc=Xc corresponding to an inflection point of the temperature control characteristics C41 and C42 (X1>Xc). In such a condition, at time t0-t1, the temperature control characteristic C42 corresponding to a dry state is referred to, and the target temperature Tt=Y2 corresponding to the in-cabin temperature Tc=X1 is set. Also, after the passage of time t1, the temperature control characteristic C41 corresponding to a humid state is referred to, and the target temperature Tt=Y1 corresponding to the in-cabin temperature Tc=X1 is set. The target temperature Tt=Y2 set prior to the passage of time t1 is higher than the target temperature Tt=Y1 set after the passage of time t1 (Y1<Y2).

Therefore, the heater periphery temperature Th (broken line of the upper stage upper side of Figure 15) by heater control referring to the temperature control characteristic C42 corresponding to dry becomes higher than the heater periphery temperature Th (solid line of an upper stage upper side of Figure 15) by heater control referring to the temperature control characteristic C41 corresponding to humid. In this way, since a temperature as felt increases when the humidity is high, and a temperature as felt decreases when the humidity is low, under a condition of the in-cabin temperature Tc=X1 (>Xc), heater control corresponding to such an in-cabin humidity Hc is performed, thereby the comfort of an occupant can be improved.

Note that, in the fourth embodiment, while an application example is described for performing heater control by considering the influence of a temperature as felt by humidity, a temperature as felt changes not only by humidity, but also with a blowing speed or temperature of air-conditioned air blown in the cabin. Accordingly, even if the temperature control characteristic referred to by heater control is switched, it is possible for the comfort of an occupant to be improved, in accordance with an air conditioning state. In the fourth embodiment, heater control executed by referring to the temperature control characteristics C41 and C42 corresponds to a "plurality of control modes" of the present invention. Moreover, heater control executed by referring to the temperature control characteristic C41 corresponding to humid corresponds to a "third control mode" of the present invention, and heater control executed by referring to the temperature control characteristic C42 corresponding to dry corresponds to a "fourth control mode" of the present invention.

### [Fifth Embodiment]

Next, a vehicle heater control device relating to a fifth embodiment of the present invention will be described.

In the fifth embodiment, an application example is described in which the target temperature Tt of the heater periphery is changed based on a traveling state of the vehicle and a charging state of the in-vehicle battery.

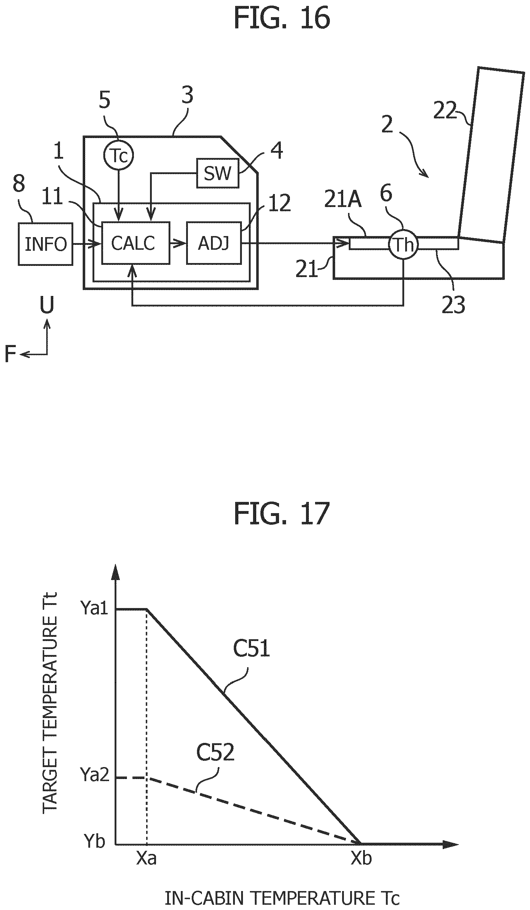

Figure 16 is a block diagram showing a configuration of the vehicle heater control device 1 of the fifth embodiment. Moreover, Figure 17 is a graph showing an example of the temperature control characteristics referred to in the fifth embodiment.

In Figure 16 and Figure 17, the point of the configuration of the vehicle heater control device 1 of the fifth embodiment being different from the case of the first embodiment is the point of having a vehicle information acquisition device (INFO) 8 connected to the calculation unit 11, and having temperature control characteristics C51 and C52 referred to by the calculation unit 11 switched, in accordance with vehicle information acquired by the vehicle information acquisition device 8. Since the other configurations in the vehicle heater control device 1 of the fifth embodiment are the same as the case of the first embodiment, the same reference numerals are attached to corresponding elements, and description will be omitted.

The vehicle information acquisition device 8 acquires vehicle information related to a traveling state and a charging state of the in-vehicle battery from an ECU or the like (not illustrated) mounted in the vehicle. A traveling state includes a vehicle speed, acceleration, braking state and the like. A charging state of the in-vehicle battery may be represented by using a parameter such as SOC (State of Charge) or SOH (State of Health). Vehicle information acquired by the vehicle information acquisition device 8 is communicated to the calculation unit 11 via signal wiring within the vehicle.

The calculation unit 11 sets the target temperature Tt corresponding to the in-cabin temperature Tc, by referring to the temperature control characteristic C52 (broken line of Figure 17), in a case of a traveling state in which a load to the in-vehicle battery is high, or in a case in which a numerical value of SOC, SOH or the like becomes smaller than a necessary standard value and a charge remaining amount of the in-vehicle battery decreases, for example, by using vehicle information from the vehicle information acquisition device 8. The temperature control characteristic C52 is set so that the target temperature Tt is relatively lower than the temperature control characteristic C51 (solid line of Figure 17) referred to at a time of a normal traveling state.

Since an operating time of the seat heater 23 can increase, by changing the target temperature Tt based on a traveling state of the vehicle and a charging state of the in-vehicle battery, it becomes possible to further improve the comfort of an occupant.

Note that, in the fifth embodiment, while an example is described in which the target temperature Tt is changed based on a traveling state of the vehicle and a charging state of the in-vehicle battery, it is possible to change the target temperature Tt of the heater periphery, based on navigation information, road surface information, congestion information or the like received through a communication line from a server or the like outside the vehicle.

### [Sixth Embodiment]

Next, a vehicle heater control device relating to a sixth embodiment of the present invention will be described.

In the sixth embodiment, an application example is described in which the heater periphery temperature Th can be adjusted, by controlling a drive state of a blower provided at the seat 2.

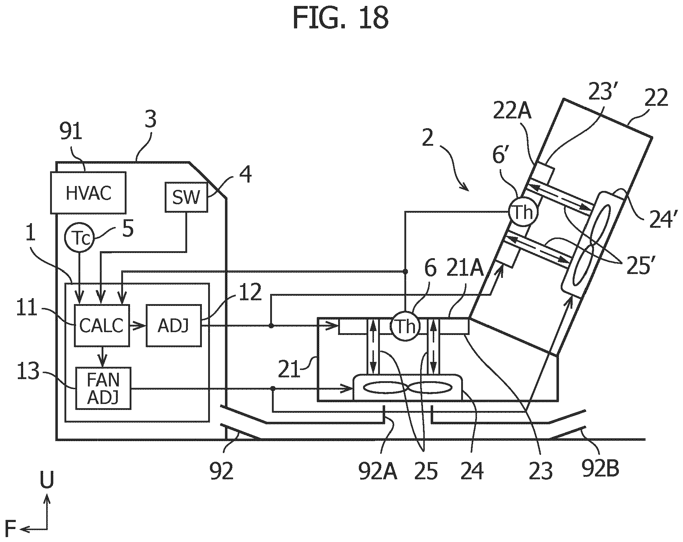

Figure 18 is a block diagram showing a configuration of the vehicle heater control device 1 of the sixth embodiment.

In Figure 18, the point of the configuration of the vehicle heater control device 1 of the sixth embodiment being different from the case of the first embodiment is the point of having a blower adjustment unit (FAN ADJ) 13 added that can adjust a drive state of blowers 24, 24' provided at the seat 2, and having the target temperature Tt set by the calculation unit 11 provided to the blower adjustment unit 13 along with the heater periphery temperature Th detected by the seat surface temperature sensor 6.

Specifically, other than the seat heater 23 and the temperature sensor 6 that are similar to the case of the first embodiment, the blower 24 and an air blowing passage 25 are provided on the seat cushion 21 of the seat 2 in the sixth embodiment. The blower 24 is disposed at a bottom surface of the seat cushion 21 on an opposite side to the seat surface 21A, and faces the vehicle bottom. The blower 24 has a fan motor capable of forward rotation and reverse rotation, and a rotation direction and number of revolutions of the fan motor can be adjusted by the blower adjustment unit 13. The air blowing passage 25 is formed across the blower 24 and the seat surface 21A, and penetrates through a location at which the seat heater 23 is installed. That is, the seat heater 23 is disposed above the air blowing passage 25 of the seat cushion 21.

Moreover, similar to the seat heater 23, the temperature sensor 6, the blower 24, and the air blowing passage 25 on the seat cushion 21 side, a seat heater 23', a temperature sensor 6', a blower 24', and an air blowing passage 25' are provided on the seatback 22 of the seat 2. The seat heater 23' is spread out so as to cover a backrest surface 22A of the seatback 22. The temperature sensor 6' is installed in the vicinity of the seat heater 23', the temperature in the periphery of the seat heater 23' is detected by the temperature sensor 6', and this detection result is communicated to the calculation unit 11.

The blower 24' is disposed on a back surface of the seatback 22 on an opposite side to the backrest surface 22A, and faces the vehicle rear. The blower 24' has a fan motor capable of forward rotation and reverse rotation, and a rotation direction and number of revolutions of the fan motor can be adjusted by the blower adjustment unit 13. The air blowing passage 25' is formed across the blower 24' and the backrest surface 22A, and penetrates through a location at which the seat heater 23' is installed. That is, the seat heater 23' is disposed above the air blowing passage 25' of the seatback 22.

In addition, an air conditioning device (HVAC) 91 mounted on the vehicle is provided on the instrument panel 3 in the sixth embodiment. A part of the air (air-conditioned air), for which the temperature or the like is adjusted by the air conditioning device 91, is guided to a blower duct 92 disposed under the seat 2.

The blower duct 92 extends to the vehicle rear from the instrument panel 3, passes through below the seat cushion 21 of the seat 2 while moving along an in-cabin floor, and extends to the lower end rear of the seatback 22. A nozzle portion 92A is formed in a middle portion of the blower duct 92 in a longitudinal direction. The nozzle portion 92A is configured so that air guided from the air conditioning device 91 to within the blower duct 92 is sent toward the blower 24 installed in the seat cushion 21. A rear end portion 92B of the blower duct 92 is inclined to the vehicle top toward the vehicle rear, and is configured so that air passing through the inside of the blower duct 92 is blown out inclined upward, with a part thereof directed toward the vicinity of the blower 24' installed in the seatback 22.

In the vehicle heater control device 1 of the sixth embodiment, similar to the case of the first embodiment, the target temperature Tt corresponding to the in-cabin temperature Tc is set by the calculation unit 11, and each drive state of the seat heaters 23, 23' is controlled by the heater output adjustment unit 12, in accordance with the target temperature Tt. Moreover, linked with heater control, a drive state of each of the blowers 24, 24' is controlled by the blower adjustment unit 13, in accordance with the heater periphery temperature Th detected by the temperature sensors 6, 6'.

Such blower control linked with heater control, for example, in a case in which the heater periphery temperature Th becomes higher than the target temperature Tt for some reason, blows air to the periphery of the seat heaters 23, 23' by driving the blowers 24, 24', or drawing in air in the periphery of the seat heaters 23, 23', and thereby, the heater periphery temperature Th can approach the target temperature Tt. In particular, since the air blowing passages 25, 25' are formed to guide air blown by the blowers 24, 24' to the periphery of the seat heaters 23, 23', the heater periphery temperature Th can be efficiently adjusted by blower control. In addition, if air-conditioned air sent from the air conditioning device 91 through the blower duct 92 is guided to the periphery of the seat heaters 23, 23' through the blowers 24, 24' and the air blowing passages 25, 25', it becomes possible for the heater periphery temperature Th to be more efficiently adjusted.

Heretofore, while first to sixth embodiments and modified examples of the present invention are described, the present invention is not limited to the first to sixth embodiments and the modified examples, and various types of modifications and changes are possible based on the technical idea of the present invention.

For example, in each of the embodiments and modified examples, while an example is described in which the seat heaters 23, 23' provided on the seat cushion 21 and the seatback 22 are set as control targets, a heater provided in, for example, a vehicle member in contact with an occupant, such an ottoman or footrest, a headrest, an armrest, or a steering wheel, may be set as a control target.

### [Reference Signs List]

- 1: vehicle heater control device
- 11: calculation unit
- 12: heater output adjustment unit
- 13: blower adjustment unit
- 2: seat
- 21: seat cushion
- 22: seatback
- 23, 23': seat heater
- 24, 24': blower
- 25, 25': air blowing passage
- 3: instrument panel
- 4: heater switch
- 5: in-cabin temperature sensor
- 6, 6': seat surface temperature sensor
- 7: in-cabin humidity sensor
- 8: vehicle information acquisition device
- 91: air conditioning device
- 92: blower duct
- C1, C21-C22, C3, C41-C42, C51-C51: temperature control characteristic
- Tc: in-cabin temperature
- Th: heater periphery temperature
- Tt: target temperature

## Claims

1. A vehicle heater control device comprising a control means for controlling a drive state of a heater for warming a vehicle member based on an in-cabin temperature showing a temperature of in-cabin air of a vehicle and a heater periphery temperature showing a temperature of a periphery of the heater, **characterized in that** the control means controls the drive state of the heater so that the heater periphery temperature is reduced as the in-cabin temperature increases, in a case in which the in-cabin temperature is within a prescribed range.

2. The vehicle heater control device according to claim 1, wherein the control means controls the drive state of the heater so that an absolute value of a rate of change of the heater periphery temperature with respect to the in-cabin temperature gradually decreases as the in-cabin temperature decreases within the prescribed range.

3. The vehicle heater control device according to claim 1, wherein the control means is capable of setting a plurality of control modes each having a different increase or decrease tendency of a rate of change of the heater periphery temperature with respect to the in-cabin temperature,
the plurality of control modes including:
a first control mode for controlling the drive state of the heater so that an absolute value of the rate of change gradually increases as the in-cabin temperature increases within the prescribed range, and
a second control mode for controlling the drive state of the heater so that an absolute value of the rate of change gradually decreases as the in-cabin temperature increases within the prescribed range.

4. The vehicle heater control device according to claim 3, wherein the control means automatically switches the plurality of control modes in accordance with an operation setting of the heater.

5. The vehicle heater control device according to claim 1, wherein the control means controls the drive state of the heater so that an absolute value of a rate of change of the heater periphery temperature with respect to the in-cabin temperature changes from increase to decrease, or changes from decrease to increase, in a change of the in-cabin temperature within the prescribed range.

6. The vehicle heater control device according to claim 1, wherein the control means is capable of setting a plurality of control modes each having a different increase or decrease tendency of a rate of change of the heater periphery temperature with respect to the in-cabin temperature,
the plurality of control modes including:
a third control mode for controlling the drive state of the heater so that an absolute value of the rate of change changes from increase to decrease in an increasing change of the in-cabin temperature within the prescribed range, and
a fourth control mode for controlling the drive state of the heater so that an absolute value of the rate of change changes from decrease to increase in an increasing change of the in-cabin temperature within the prescribed range.

7. The vehicle heater control device according to claim 6, wherein the control means automatically switches a setting of the plurality of control modes in accordance with an in-cabin humidity showing a humidity of in-cabin air.

8. The vehicle heater control device according to claim 1, wherein the control means changes a target temperature of a periphery of the heater based on a traveling state of the vehicle and a charging state of an in-vehicle battery.

9. The vehicle heater control device according to claim 1, wherein the control means is configured to be capable of adjusting the heater periphery temperature by controlling a drive state of a blower provided on the vehicle member.

10. The vehicle heater control device according to claim 9, wherein an air blowing passage for guiding air blown by the blower to a periphery of the heater is formed on the vehicle member.
